# NEW EUROPEAN PATENT SPECIFICATION

(11) **EP 0 315 463 B2**
(45) Date of publication and mention of the opposition decision: **27.11.2002**
(45) Mention of the grant of the patent: 10.01.1996
(21) Application number: 88310388.9
(22) Date of filing: 04.11.1988
(51) Int. Cl.: B60T 17/08

(54) **Tamper-resistant brake actuator**
Narrensichere Bremsbetätigungsvorrichtung
Dispositif d'actionnement de frein résistant aux dégradations

(30) Priority: 06.11.1987 US 118372
(43) Date of publication of application: 10.05.1989
(73) Proprietor: INDIAN HEAD INDUSTRIES, INC., Southfield Michigan 48034 (US)
(72) Inventor: Gummer, Allen L., Santa Rosa California 95404 (US); Choinski, Graydon J., Utica Michigan 48087 (US); Brooks, David W., Royal Oak Michigan 48073 (US)
(74) Representative: Lawrence, Peter Robin Broughton

(56) References cited:
- GB-A- 2 000 225
- US-A- 3 331 291
- US-A- 4 109 350

## Description

The present invention relates generally to braking systems and, more specifically, to tamper-resistant brake actuators such as fluid-operated air brake actuators.

Fluid-operated braking systems such as air brake systems have long been used to control the movement of motor vehicles in a safe and effective manner. In particular, air brakes are commonly used on commercial vehicles such as trucks which typically have large gross vehicle weights. The considerable inertial mass of these heavy-duty vehicles, in combination with the high speeds at which they travel, requires a braking system which responds rapidly on actuation with substantial braking power. One system component which is instrumental in the operation of air brake systems is the brake actuator. The brake actuator provides the force necessary when braking a vehicle. The present Applicant produces a number of high-quality commercial air brake actuators. many of which actuate the normal service brakes as well as parking/emergency brakes. These brake actuators, also known as spring brakes, typically have a network of air chambers defined by one or more diaphragms or pistons and a plurality of springs which operate to provide the appropriate braking action in response to directives from the vehicle driver. In the event an air braking system loses pressure, the brake actuator automatically engages the vehicle brakes.

Brake actuators of this type, with or without a service brake section, have a powerful coil spring seated within a housing or head portion of the actuator. When corn-pressed, the power spring exerts a biasing force in an axial direction relative to the housing. The power spring has a high spring constant such that, once compressed, it has a substantial amount of potential energy. When released, the stored energy of the spring is converted into kinetic energy to be used in the braking operation. However, premature removal of the actuator head, that is, removal of the head while the power spring is compressed, may cause this energy to be released in an undesirable manner. For example, the actuator cap or head assembly is typically attached to the flange case using a single or multiple section ring damp, the damp being secured in position by one or more retaining bolts. In the field, the injudicious removal of these retaining bolts may release the ring damp causing the head or cap to detach from the case flange. Once released, the immense energy of the spring is transmitted to the actuator head which is propelled away from the flange case with considerable force. Hence, the air pressure which retains the power spring in its compressed state must be dissipated prior to the removal of the clamp, and the power spring must be "caged" within the head. Moreover, these prior art clamp rings can be difficult to position when assembling the actuator.

Typically, instructions are attached to the brake actuators to inform those attempting inspection or repair of the presence of the power spring and of the consequences which may result from tampering with the head retaining ring damp when the power spring is in the compressed state, evidencing recognition by the art of the tampering problem. However, it would still be desirable to provide a device for attaching the actuator head to the flange case in a manner which would prevent removal in the field.

Restraining and damping devices have been proposed for addressing the improvident detachment of a brake actuator head from the flange case. US-A-4,565,120, a device for restraining the separation of brake actuator housing is disclosed which consists of a sheet metal body having a notch which receives the housing flanges. The notch is large enough to permit partial separation of the housing flanges upon release of the flange damp band. A number of damping bands are also known such as those disclosed in US-A-3,106,757, "Clamp Structure for Metal Bands", US-A-3,295,176; "Hose Clamps", US-A- 4 583 773, -Releasable Tubular Clamps for the Connection of Cylindrical or Profiled Tubes"; US-A- 4,451,955, "Crimp-Type Clamp"; US-A-4,430,775, "Muffler Shield Banding Strap"; US-A-3,602,954, 'Annular Hose Clip"; US-A- 2;541,205 and US-A- 4,109,350 "Clamp Band". For a variety of reasons, none of these latter damping devices, however, are appropriate for providing a tamper-resistant brake actuator, nor is any such use disclosed or suggested by these references which are considered to be non-analogous art with respect to brake actuators. Thus, to meet this need, the present invention seeks to provide a reliable tamper-resistant fluid-operated brake actuator.

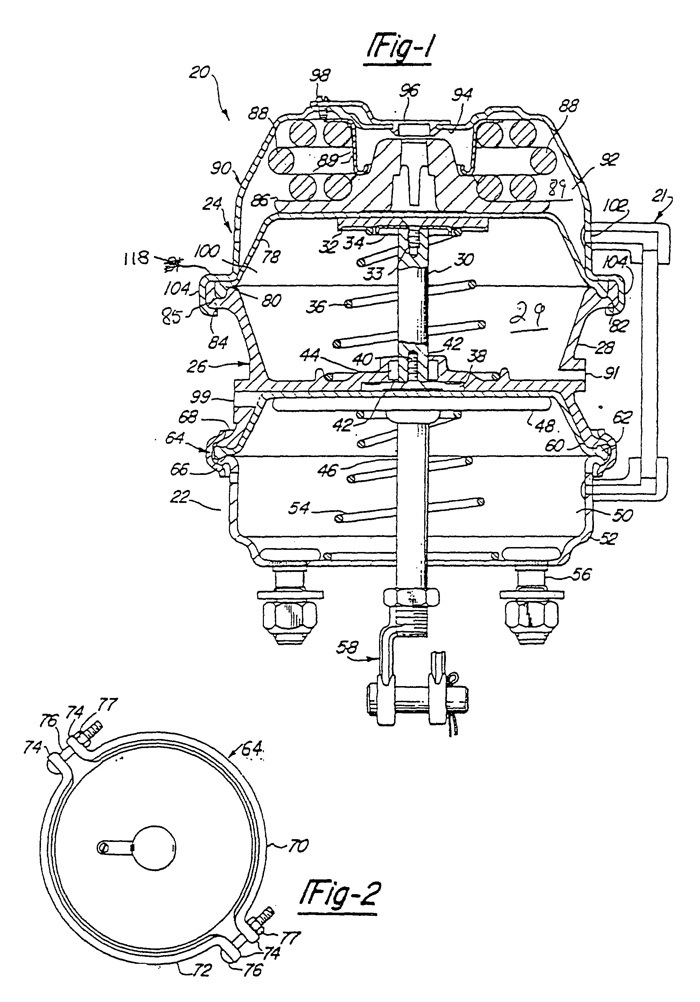

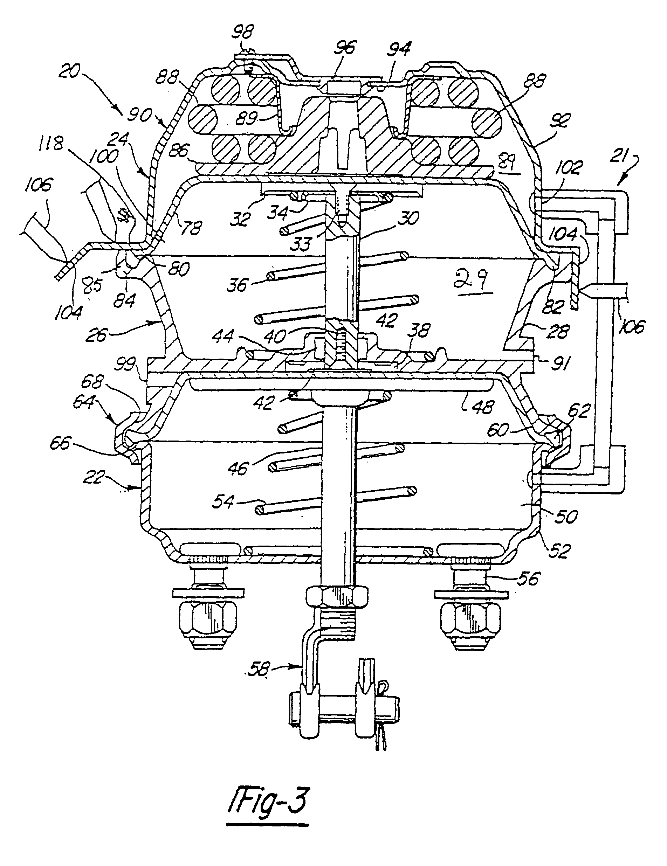

GB-A-2,000,225 disclosed a brake actuator of a sort other than those covered by the present invention. In this type of actuator a piston moves within a power chamber. The problems presented by the brake actuator of the present invention with regard to securing a diaphragm between the head and the flange case, while at the same time permanently deforming the securing member to retain the head to the flange case are not addressed by this reference. Further, the structure of the flange case and the bending of cylinder 7, as is disclosed in Figure 2 of the 225 reference, would not provide a sufficiently secure connection for use in the type of brake actuators covered by the present invention.

US-A- 3478,519 discloses a multiple power booster braking arrangement in which annular edge portions of walls forming part of the arrangement are deformed around peripheral head portions of diaphragms to hold the diaphragms in place and to secure the arrangement together. US 3439585 discloses a brake actuator in accordance with the preamble of the independant claims.

According to the present invention then, a tamper-resistant fluid-operated brake actuator comprises a tamper-resistant fluid-operated brake actuator comprising a flange case having a pair of opposed chamber portions defining portions of a spring chamber and a service chamber respectively, said flange case having an annular flange which extends generally radially outwardly from said portion defining part of said spring chamber, a service chamber housing defining said service chamber with said flange case portion, a diaphragm received between said service chamber housing and said flange case, a spring mounted between said service chamber housing and said service chamber diaphragm and biasing said service chamber diaphragm towards said flange case, a head having an annular radially extending rim secured to said annular flange to define said spring chamber, a spring chamber diaphragm having an outer peripheral portion disposed between said annular flange of said flange case and said annular rim of said head, a power spring piston mounted on said spring chamber diaphragm, a power spring mounted in contact with said power spring piston, and between said power spring piston and said head, a second spring mounted between said spring chamber diaphragm and said flange case, a push rod mounted in contact with said spring chamber diaphragm and extending through said flange case, into said service chamber and outwardly through said service chamber housing and adapted to be connected to a yoke assembly, characterised in that a securing member extends around approximately 360° of the actuator and secures said annular rim to said annular flange and is an extension of the annular rim (118) and is integrally formed with the head, said securing member having a radially extending portion radially aligned with said annular flange and said spring chamber diaphragm, and on a side of said spring chamber diaphragm spaced towards said power spring and said head, said securing member being deformed beyond its elastic limit around said annular flange onto the side distant from the power spring and the head (a) to entrap and compress between said annular flange and said annular rim, said outer peripheral portion of said spring chamber diaphragm which is radially aligned with the flange and the radially extending portion of the securing member and thereby to form an airtight seal and (b) to retain said head to said flange case such that said head is rigidly secured to said flange case by said securing member, whereby to remove said head from said flange case, said securing member must be deformed beyond its elastic limit.

Furthermore according to the present invention, a tamper-resistant fluid-operated brake actuator comprises a tamper-resistant fluid-operated brake actuator comprising a brake actuator head of deformable metal, a flange case of relatively rigid cast material having a first portion extending radially outwardly from the remainder of the flange case, a flexible diaphragm disposed between the head and the flange case, a power spring disposed between the head and the diaphragm, the diaphragm having an outer peripheral portion overlying a portion of said first portion of said flange case and a push rod disposed between the diaphragm and the flange case, the push rod adapted for movement with the diaphragm, and extending through an opening in the flange case, characterised by the head including an integral annular rim having a radially extending portion extending radially outwardly from the remainder of the head and overlying and contacting the outer peripheral portion of the diaphragm, the annular rim further comprising a securing portion integrally formed with the head including an axially extending portion for securing the annular rim to the first portion of the flange case, the radially extending portion being radially aligned with the outer peripheral portion of the diaphragm and on a side of the diaphragm towards the power spring and the head, the securing portion then extending axially beyond the diaphragm and the first portion of the flange casing and inelastically deformed radially inwardly behind the first portion of the flange casing on to the side distant from the power spring and the head, into a generally U-shaped configuration (a) to entrap and compress between the radially extending portion of the rim and the radially extending first portion of the flange case, said outer peripheral portion of said spring chamber diaphragm which is radially aligned with the flange and the radially extending portion of the securing member and thereby to form an airtight seal, and (b) to retain the head to the flange casing such that the head is rigidly secured to the flange casing by the securing member, whereby to remove the head from the flange casing the securing member must be deformed beyond its elastic limit.

The invention will now be further described by way of examples with reference to the accompanying drawings, in which:
Figure 1 is a cross-sectional side elevational view of one tamper-resistant brake actuator of the present invention,
Figure 2 is a top view of the. brake actuator shown in Figure 1 to a smaller scale illustrating a clamping band having two retaining bolts for the service brake section;
Figure 3 is a cross-sectional side elevational view of the brake actuator depicted in figure 1 in an intermediate stage of fabrication;

Referring now to Figure 1 of the drawings, in one embodiment of the present invention, brake actuator 20 is shown generally, illustrated here as a double-diaphragm air brake actuator having an external tube breather system 21. Brake actuator 20 includes service chamber assembly 22 and spring chamber assembly 24. Flange case and push rod subassembly 26 is shown having flange case 28 defining a spring chamber 29 and push rod 30. Connected by push rod plate retaining screw 33 to one end of push rod 30 is spring side push rod plate 32. Spring guide 34 is provided to hold return spring 36 in position. To the other end of push rod 30, service side push rod plate 38 is attached by push rod plate retaining screw 40. During operation, push rod 30 moves axially in relation to flange case 28 on the bearing surfaces of push rod guide bushings 42 in contact with push rod case seal 44. Service chamber assembly 22 similarly includes push rod 46 to which service side piston 48 is attached. Non-pressure service chamber 50 is defined by service housing 52 which encloses return spring 54. Conventional mounting bolts 56 and yoke assembly 58 are also shown. Other brake actuator assemblies may be suitable in the present invention.

As will be understood by those skilled in the art, fluid Nor "air brakes" of this nature are controlled by the movement of one or more flexible diaphragms and rigid piston plates which combine to form a moveable wall when actuated by air pressure differentials created in the various chambers of brake actuator 20. Hence, brake actuator 20 is equipped with diaphragm 60 having an expanded outside diameter portion or simply expanded portion 62 in the nature of an integral O-ring or the like. Diaphragm 60 forms a hermetic or air-tight seal by the compression of expanded portion 62 at the interface of service housing 52 and flange case 28. Hence, diaphragm 60 is formed of a resilient material such as rubber, neoprene, fabric-centre reinforced neoprene or the like. In order to obtain this compression of expanded portion 62 and to attach service housing 52 to flange case 28, clamping ring 64 is positioned over annular flange portion 66 of housing 52 and annular flange portion 68 of flange case 28.

Clamp ring 64 is shown more fully in Figure 2 having two semicircular portions 70 and 72 each having tabs or ears 74 through which clamp retaining bolts 76 are inserted to tighten clamp 64 in position by tightening retaining nuts 77 on bolts 76. That is, clamp 64 secures housing 52 to flange case 28 and compresses expanded portion 62 of diaphragm 60 forming an air-tight seal. This conventional construction of clamp 64 is suitable for the attachment of housing 52 to flange case 28 since return spring 54 is not a power spring. One piece, single-bolt clamps of this type are also known.

Returning to Figure 1 of the drawings, spring side diaphragm 78 is shown having expanded portion 80 which is again in the nature of an integral O-ring or the like. Portion 80 is seated in annular groove 82 of annular flange 84 of flange case 28, which annular flange 84 has a portion 85 extending perpendicularly therefrom. Thus, spring side push rod plate 32 is adjacent one side of diaphragm 78 while spring side piston 86 is adjacent the other side of diaphragm 78. Brake actuator 20 is shown in Figure 1 in the normal driving mode. In this mode and in the normal service brake mode, spring side piston 86 compresses heavy-duty power spring 88 within power spring chamber 89 defined by cap or head 90 and around spring guide 89 by virtue of the air pressure exerted on diaphragm 78 through inlet 91. Diaphragm 78 and spring side piston 86 form a first moveable wall held in the illustrated position by air pressure in this mode of operation. A head assembly 92 is thus defined by head 90 and diaphragm 78. Head 90 is provided with aperture 94 shown closed with dust cover or plug 96 secured to head 90 by dust plug screw 98 and retained on head 90 with an interferencefitting, annular lined flange. Aperture 94 provides access to piston 86 using a release bolt (not shown in Figure 1).

In the normal service brake mode, air is injected through inlet 99 intoflange case chamber 29 causing diaphragm 60 and service side piston 48 to move downwardly. It will be understood that diaphragm 60 and service side piston 48 form a second moveable wall which is air-pressure responsive. The downward movement of this second moveable wall causes push rod 46 to thrust out from service housing 52 to set the vehicle brakes.

Hence, when chamber 100 is sufficiently pressurized with air which is supplied through inlet 91, the moveable wall formed by diaphragm 78 and thus spring side piston 86 are held in the position shown in Figure 1 so that power spring 88 is, as stated, substantially compressed within head assembly 92. In this state, power spring 88 has a considerable amount of stored or potential energy. When chamber 100 is depressurized, diaphragm 78 no longer holds spring side piston 86 which in response to the depressurization moves axially with relation to push rod 30. In turn, the movement of push rod 30 causes push rod 46 to thrust out from service housing 52. It is this movement of push rod 46 which actuates or sets the vehicle brakes. When the movement of push rod 46 is caused by the expansion of power spring 88, brake actuator 20 is in the parking or emergency brake mode. In this mode, springs 36 and 54 are compressed. It will therefore be understood that the spring constant of power spring 88 is much greater than that of springs 36 and 54 in combination. As diaphragm 78 moves in response to the depressurization of chamber 100 and the movement of spring side piston 86, air must enter head assembly 92. This is achieved through vents 102 in head 90 via external tube breather system 21 which reduces the uptake of atmospheric debris and the like.

Hence, it is necessary that power spring 88 be compressed between piston 86 and head 90 during normal driving and normal service brake mode. In these modes, power spring 88 exerts substantial force on head 90 in the direction away from flange case 28. Although devices similar to clamping ring 64 shown in Figure 2 have in the past also been used to connect or clamp head 90 to flange case 28 at flanges 84, as discussed earlier, improvident removal of such a clamp ring, which can be accomplished simply by removing retaining nut 77, will cause head 90 to separate from flange case 28 with considerable force. Improvident removal of head 90 is avoided by the present invention by providing an annular metal retaining member 104 which is an integral portion of head 90.

Still referring to Figure 1 of the drawings, deformable retaining member 104 is shown in position on flange portion 84 of flange case 28 compressing expanded portion 80 of diaphragm 78 to form an hermetic or air-tight seal. Hence, head 90 cannot be removed from flange case 28 except by bending, prying, cutting or otherwise deforming or destroying retaining member 104 to remove it from flange 84. That is, flange 84 fits within a groove or channel defined by and coextensive with said retaining member 104 and is securely assembled by spinning or bending retaining member 104 over flange 84. It will be understood that retaining member 104 and, as stated, flange 84 are annular or ring-shaped, which may be a solid or interrupted section, such as an axially slotted configuration which facilitates crimping, extending around the circumference or perimeter of brake actuator 20. Thus, the opportunity for the removal created by retaining bolt-type clamps is avoided. Not only will field removal be unlikely due to the increased difficulty of removing head 90, the prospect of reattaching head 90 to flange case 28 without specialized tools, provides further deterrence to tampering.

Although other methods of forming retaining member 104 in place on flange 84 may be suitable, it is preferred that the attachment be made by metal spinning, crimping, coining, or over-centre forming techniques which will be familiar to those skilled in the art.

Referring now to Figure 3 of the drawings, brake actuator 20 is seen with retaining member 104 shown in an intermediate stage of construction. Head 90 has been placed in position on flange case 28. Note that brake actuator 20 is shown in Figure 3 having power spring 88 in the compressed mode. With head 90 in position having retaining member 104 projecting over or overlying flange 84, retaining member 104 is deformed beyond its elastic limit using tool 106 during metal spinning or forming to fasten retaining member 104 around flange 84. An alternate method would use a press to crimp a slotted retaining member around flange 84. The metal spinning operation maybe suitably carried out using a lathe or equivalent device in the customary manner. Although steel is the metal of choice for forming head 90 and retaining member 104 due to its easy machineability, other metals may be suitable. Head 90 is thus securely attached to flange case 28 by way of spun-on retaining member 104 or a crimped-on retaining member in a tamper resistant manner.

## Claims

1. A tamper-resistant fluid-operated brake actuator (20) comprising
a flange case (28) having a pair of opposed chamber portions defining portions of a spring chamber (29) and a service chamber (50) respectively, said flange case (28) having an annular flange (84) which extends generally radially outwardly from said portion defining part of said spring chamber (89),
a service chamber housing (52) defining said service chamber (50) with said flange case portion,
a diaphragm (60) received between said service chamber housing (52) and said flange case (28),
a spring (54) mounted between said service chamber housing (52) and said service chamber diaphragm (60) and biasing said service chamber diaphragm (60) towards said flange case (28),
a head (90) having an annular radially extending rim (118) secured to said annular flange (84) to define said spring chamber (89),
a spring chamber diaphragm (78) having an outer peripheral portion disposed between said annular flange (84) of said flange case (28) and said annular rim (118) of said head (90),
a power spring piston (86) mounted on said spring chamber diaphragm (78),
a power spring mounted (88) in contact with said power spring piston (86), and between said power spring piston (86) and said head (90),
a second spring (36) mounted between said spring chamber diaphragm (78) and said flange case (28),
a push rod (30) mounted in contact with said spring chamber diaphragm (78) and extending through said flange case (28), into said service chamber (50) and outwardly through said service chamber housing (52) and adapted to be connected to a yoke assembly (58), **characterised in that**
a securing member (104) extends around approximately 360° of the actuator and secures said annular rim (118) to said annular flange (84), and is an extension of the annular rim (118) and is integrally formed with the head (90),
said securing member (104) having a radially extending portion radially aligned with said annular flange (84) and said spring chamber diaphragm and on a side of said chamber diaphragm (78) spaced towards said power spring (88) and said head (90),
said securing member (104) being deformed beyond its elastic limit around said annular flange (84) onto the side distant from the power spring (88) and the head (90) (a) to entrap and compress between said annular flange and said annular rim, said outer peripheral portion of said spring chamber diaphragm (78) which is radially aligned with the flange (84) and the radially extending portion of the securing member (104) and thereby to form an airtight seal and (b) to retain said head (90) to said flange case (28) such that said head (90) is rigidly secured to said flange case (28) by said securing member (104),
whereby to remove said head (90) from said flange case (28), said securing member (104) must be deformed beyond its elastic limit.

2. A tamper-resistant fluid operated brake actuator (20) comprising
a brake actuator head (90) of deformable metal,
a flange case (28) of relatively rigid cast material having a first portion extending radially outwardly from the remainder of the flange case,
a flexible diaphragm (78) disposed between the head (90) and the flange case (28),
a power spring (88) disposed between the head (90) and the diaphragm (78),
the diaphragm (78) having an outer peripheral portion overlying a portion of said first portion of said flange case (28)
and a push rod (30) disposed between the diaphragm (78) and the flange case (28), the push rod (30) adapted for movement with the diaphragm (78), and extending through an opening in the flange case (28), **characterised by**
the head (90) including an integral annular rim (118) having a radially extending portion extending radially outwardly from the remainder of the head and overlying and contacting the outer peripheral portion of the diaphragm (78),
the annular rim (118) further comprising a securing portion (104) integrally formed with the head including axially extending portion for securing the annular rim to the first portion of the flange case (28),
the radially extending portion being radially aligned with the outer peripheral portion of the diaphragm (78) and on a side of the diaphragm towards the power spring (88) and the head (90),
the securing portion (104) then extending axially beyond the diaphragm (78) and the first portion of the flange casing (28) and inelastically deformed radially inwardly behind the first portion of the flange casing (28) onto the side distant from the power spring (88) and the head (90), into a generally U-shaped configuration (a) to entrap and compress between the radially extending portion of the rim (118) and the radially extending first portion of the flange case, said outer peripheral portion of said chamber (78) which is radially aligned with the flange (84) and the radially extending portion of the securing member (104) and thereby to form an airtight seal and (b) to retain the head (90) to the flange casing (28) such that the head is rigidly secured to the flange casing (28) by the securing member (104)
whereby to remove the head (90) from the flange casing (28) the securing member (104) must be deformed beyond its elastic limit.

3. A tamper-resistant brake-actuator as claimed in claim 2, wherein the securing portion (104) is generally U-shaped over approximately 360°C of its circumferential extent.

## Patentansprüche

1. Gegen unsachgemäße Eingriffe geschützter, mit Fluid betriebener Bremsenstellantrieb (20), umfassend:
- ein Flanschgehäuse (28) mit einem Paar gegenüberliegender Kammerabschnitte, die Abschnitte einer Federkammer (29) beziehungsweise einer Betriebskammer (50) abgrenzen, wobei das Flanschgehäuse (28) einen ringförmigen Flansch (84) aufweist, der sich im Allgemeinen radial nach außen von dem Abschnitt aus erstreckt, der den Teil der Federkammer (89) abgrenzt,
- ein Betriebskammergehäuse (52), das die Betriebskammer (50) mit dem Flanschgehäuseabschnitt abgrenzt,
- eine Membran (60), die zwischen dem Betriebskammergehäuse (52) und dem Flanschgehäuse (28) eingefügt wird,
- eine Feder (54), die zwischen dem Betriebskammergehäuse (52) und der Betriebskammermembran (60) montiert wird und die Betriebskammermembran (60) in Richtung des Flanschgehäuses (28) vorspannt,
- einen Kopf (90) mit einem sich radial erstreckenden Kranz (118), der an dem ringförmigen Flansch (84) befestigt ist, um die Federkammer (89) abzugrenzen,
- eine Federkammermembran (78) mit einem äußeren peripheren Teil, das zwischen dem ringförmigen Flansch (84) des Flanschgehäuses (28) und dem ringförmigen Kranz (118) des Kopfes (90) angeordnet ist,
- einen Bremskraftverstärkerfederkolben (86), der auf der Federkammermembran (78) montiert ist,
- eine Bremskraftverstärkerfeder (88), die in Kontakt mit dem Bremskraftverstärkerfederkolben (86) sowie zwischen dem Kolben der Bremskraftverstärkerfeder (86) und dem Kopf (90) montiert ist,
- eine zweite Feder (36), die zwischen der Federkammermembran (78) und dem Flanschgehäuse (28) montiert ist,
- eine Stößelstange (30), die in Kontakt mit der Federkammermembran (78) montiert ist und sich durch das Flanschgehäuse (28) hindurch in die Betriebskammer (50) und nach außen durch das Betriebskammergehäuse (52) erstreckt und so ausgelegt ist, dass sie mit einer Jochbaugruppe (58) verbunden werden kann,
**dadurch gekennzeichnet, dass**
- ein Sicherungselement (104) sich etwa 360° um den Stellantrieb herum erstreckt und den ringförmigen Kranz (118) an dem ringförmigen Flansch (84) befestigt und eine Verlängerung des ringförmigen Kranzes (118) ist und als integraler Bestandteil zusammen mit dem Kopf (90) geformt wird,
- das Sicherungselement (104) ein sich radial erstreckendes Stück aufweist, das radial zu dem ringförmigen Flansch (84) und der Federkammermembran ausgerichtet ist und auf einer Seite der Federkammermembran (78) im Abstand zu der Bremskraftverstärkerfeder (88) und dem Kopf (90) angeordnet ist,
- das Sicherungselement (104) auf der Seite, die von der Bremskraftverstärkerfeder (88) und dem Kopf (90) abgewandt ist, über seine Elastizitätsgrenze hinaus um den ringförmigen Flansch (84) verformt wird, um (a) zwischen diesem ringförmigen Flansch und diesem ringförmigen Kranz das äußere periphere Teil der Federkammermembran (78), das radial zu dem Flansch (84) und dem sich radial erstreckenden Teil des Sicherungselements (104) ausgerichtet ist, einzuschließen und zusammenzudrücken und damit eine luftundurchlässige Abdichtung zu bilden und um (b) diesen Kopf (90) auf dem Flanschgehäuse (28) so festzuhalten, dass der Kopf (90) in starrer Weise mit dem Flanschgehäuse (28) durch das Sicherungselement (104) verbunden ist,
- wobei, um den Kopf (90) von dem Flanschgehäuse (28) zu entfernen, das Sicherungselement (104) über seine Elastizitätsgrenze hinaus verformt werden muss.

2. Gegen unsachgemäße Eingriffe geschützter, mit Fluid betriebener Bremsenstellantrieb (20) umfassend
- einen Bremsenstellantriebkopf (90) aus verformbarem Metall,
- ein Flanschgehäuse (28) aus relativ starrem Gussmaterial mit einem ersten Teil, das sich radial nach außen von dem Rest des Flanschgehäuses aus erstreckt,
- eine flexible Membran (78), die zwischen dem Kopf (90) und dem Flanschgehäuse (28) angeordnet ist,
- eine Bremskraftverstärkerfeder (88), die zwischen dem Kopf (90) und der Membran (78) angeordnet ist,
- wobei die Membran (78) ein äußeres peripheres Teil ausweist, das über einem Teil des ersten Teils des Flanschgehäuses (28) liegt,
- und eine Stößelstange (30), die zwischen der Membran (78) und dem Flanschgehäuse (28) angeordnet ist, wobei die Stößelstange (30) für die Bewegung mit der Membran (78) ausgelegt ist und sich durch eine Öffnung in dem Flanschgehäuse (28) erstreckt,
**dadurch gekennzeichnet, dass**
- der Kopf (90) als integralen Bestandteil einen ringförmigen Kranz (118) mit einem sich radial erstreckenden Teil aufweist, das sich radial nach außen von dem Rest des Kopfs erstreckt und über dem äußeren peripheren Teil der Membran (78) liegt und mit diesem Kontakt hat,
- und der ringförmige Kranz (118) weiterhin ein Sicherungsstück (104) umfasst, das als integraler Bestandteil zusammen mit dem Kopf geformt ist und ein sich axial erstreckendes Teil umfasst, um den ringförmigen Kranz an dem ersten Teil des Flanschgehäuses (28) zu befestigen,
- wobei das sich radial erstreckende Teil radial zu dem äußeren peripheren Teil der Membran (78) und auf einer Seite der Membran zu der Bremskraftverstärkerfeder (88) und dem Kopf (90) ausgerichtet ist,
- das Sicherungsstück (104) sich dann axial über die Membran (78) und das erste Teil des Flanschgehäuses (28) hinaus erstreckt und inelastisch verformt ist, und zwar radial nach innen und hinter dem ersten Teil des Flanschgehäuses (28) auf die Seite, die von der Bremskraftverstärkerfeder (88) und dem Kopf (90) abgewandt ist, in eine im Allgemeinen U-förmige Konfiguration, um (a) zwischen diesem sich radial erstreckenden Teil des Kranzes (118) und dem sich radial erstreckenden ersten Teil des Flanschgehäuses das äußere periphere Teil der Federkammermembran (78), die radial zu dem Flansch (84) und dem sich radial erstreckenden Teil des Sicherungselements (104) ausgerichtet ist, einzuschließen und zusammenzudrücken und damit eine luftundurchlässige Abdichtung zu bilden und um (b) den Kopf an dem Flanschgehäuse (28) so festzuhalten, dass der Kopf in starrer Weise mit dem Flanschgehäuse (28) durch das Sicherungselement (104) verbunden ist,
- wobei, um den Kopf (90) von dem Flanschgehäuse (28) zu entfernen, das Sicherungselement (104) über seine Elastizitätsgrenze hinaus verformt werden muss.

3. Gegen unsachgemäße Eingriffe geschützter Bremsenstellantrieb nach Anspruch 2, bei dem das Sicherungsstück (104) im Allgemeinen U-förmig ist und sich näherungsweise über 360° des Umfangs erstreckt.

## Revendications

1. Dispositif (20) d'actionnement de frein, résistant aux dégradations, à commande par fluide, comprenant un boîtier à bride (28) présentant une paire de portions de chambre opposées, définissant des portions d'une chambre à ressort (29) et d'une chambre de service (50) respectivement, ledit boîtier à bride (28) présentant une bride annulaire (84) qui s'étend généralement radialement vers l'extérieur à partir de ladite portion définissant une partie de ladite chambre à ressort (89),
un carter (52) de chambre de service définissant ladite chambre de service (50) avec ladite portion de boîtier à bride,
une membrane (60) reçue entre ledit carter (52) de chambre de service et ledit boîtier à bride (28),
un ressort (54) monté entre ledit carter (52) de chambre de service et ladite membrane de chambre de service (60) et sollicitant ladite membrane de chambre de service (60) vers ledit boîtier à bride (28),
une tête (90) présentant un bord annulaire (118) d'extension radiale, fixé à ladite bride annulaire (84), pour définir ladite chambre à ressort (89),
une membrane (78) de chambre à ressort présentant une portion périphérique externe disposée entre ladite bride annulaire (84) dudit boîtier à bride (28) et ledit bord annulaire (118) de ladite tête (90),
un piston de ressort de puissance (86) monté sur ladite membrane (78) de chambre à ressort,
un ressort de puissance (88) monté en contact avec ledit piston de ressort de puissance (86), et entre ledit piston de ressort de puissance (86) et ladite tête (90),
un deuxième ressort (36) monté entre ladite membrane (78) de chambre à ressort et ledit boîtier à bride (28),
une tige poussoir (30) montée en contact avec ladite membrane (78) de chambre à ressort et s'étendant à travers ledit boîtier à bride (28), dans ladite chambre de service (50) et vers l'extérieur à travers ledit carter (52) de chambre de service, et adaptée pour être connectée à un système à étrier (58), **caractérisé en ce que**
un élément de fixation (104) entoure le dispositif d'actionnement sur environ 360°, et fixe ledit bord annulaire (118) à ladite bride annulaire (84) et est un prolongement du bord annulaire (118) et est formé d'une pièce avec la tête (90),
ledit élément de fixation (104) présentant une portion s'étendant radialement, alignée radialement avec ladite bride annulaire (84) et ladite membrane de chambre à ressort et d'un côté de ladite membrane (78) de chambre à ressort écartée en direction dudit ressort de puissance (88) et de ladite tête (90),
ledit élément de fixation (104) étant déformé au-delà de sa limite élastique autour de ladite bride annulaire (84), pour recouvrir le côté écarté du ressort de puissance (88) et de la tête (90), pour (a) enchâsser entre ladite bride annulaire et ledit bord annulaire, ladite portion périphérique externe de ladite membrane (78) de chambre à ressort qui est alignée radialement avec la bride (84) et la portion d'extension radiale de l'élément de fixation (104), et former ainsi un joint étanche à l'air, et (b) pour retenir ladite tête (90) sur ledit boîtier à bride (28) de telle sorte que ladite tête (90) est fixée rigidement audit boîtier à bride (28) par ledit élément de fixation (104),
si bien que, pour retirer ladite tête (90) dudit boîtier à bride (28), ledit élément de fixation (104) doit être déformé au-delà de sa limite élastique.

2. Dispositif (20) d'actionnement de frein, résistant aux dégradations, à commande par fluide, comprenant
une tête (90) d'actionnement de frein en un métal déformable,
un boîtier à bride (28) en une matière coulée relativement rigide, présentant une première portion s'étendant radialement vers l'extérieur à partir du reste du boîtier à bride,
une membrane souple (78) disposée entre la tête (90) et le boîtier à bride (28),
un ressort de puissance (88) disposé entre la tête (90) et la membrane (78),
la membrane (78) présentant une portion périphérique externe recouvrant une portion de ladite première portion dudit boîtier à bride (28)
et une tige poussoir (30) disposée entre la membrane (78) et le boîtier à bride (28), la tige poussoir (30) étant adaptée pour se déplacer avec la membrane (78), et s'étendant à travers une ouverture dans le boîtier à bride (28), **caractérisé en ce que**
la tête (90) comporte un bord annulaire intégral (118) présentant une portion s'étendant radialement, qui s'étend radialement à partir du reste de la tête, et recouvre et est en contact avec la portion périphérique externe de la membrane (78),
le bord annulaire (118) comprend en outre une portion de fixation (104) formée de manière intégrale avec la tête, comportant une portion s'étendant axialement pour fixer le bord annulaire à la première portion du boîtier à bride (28),
la portion s'étendant radialement est alignée radialement avec la portion périphérique externe de la membrane (78), et d'un côté de la membrane tourné vers le ressort de puissance (88) et la tête (90),
la portion de fixation (104) s'étend ensuite axialement au-delà de la membrane (78), et de la première portion du boîtier à bride (28), et est déformée de façon non élastique radialement vers l'intérieur, au-delà de la première portion du boîtier à bride (28), pour recouvrir le côté écarté du ressort de puissance (88) et de la tête (90), en une configuration de forme générale en U (a) pour enchâsser entre la portion s'étendant radialement du bord (118) et la première portion d'extension radiale du boîtier à bride, ladite portion périphérique externe de ladite chambre (78) qui est alignée radialement avec la bride (84) et, la portion d'extension radiale de l'élément de fixation (104), et former ainsi un joint étanche à l'air, et (b) pour retenir la tête (90) sur le boîtier à bride (28), de telle sorte que la tête soit maintenue rigidement sur le boîtier à bride (28) par l'élément de fixation (104)
si bien que, pour retirer la tête (90) du boîtier à bride (28) l'élément de fixation (104) doit être déformé au-delà de sa limite élastique.

3. Dispositif d'actionnement de frein résistant aux dégradations selon la revendication 2, dans lequel la portion de fixation (104) a une forme générale en U sur environ 360° de son étendue circonférentielle.
